(19) Europäisches Patentamt

European Patent Office

Office européen des brevets

(11) **EP 1 145 831 B1**

(12) **EUROPÄISCHE PATENTSCHRIFT**

(45) Veröffentlichungstag und Bekanntmachung des Hinweises auf die Patenterteilung:
**13.10.2004   Patentblatt 2004/42**

(51) Int Cl.[7]: **B29C 71/04**, B29C 59/16, B60S 1/38

(21) Anmeldenummer: **01108112.2**

(22) Anmeldetag: **30.03.2001**

(54) **Scheibenwischerblatt und Verfahren zur Herstellung von vulkanisierten Elastomeren**

Windscreen wiper blade and process for the production of vulcanized elastomers

Balai d'essuie-glaces et procédé de fabrication d'élastomères vulcanisés

(84) Benannte Vertragsstaaten:
**BE DE FR GB**

(30) Priorität: **11.04.2000  DE 10017974**

(43) Veröffentlichungstag der Anmeldung:
**17.10.2001   Patentblatt 2001/42**

(73) Patentinhaber: **ROBERT BOSCH GMBH**
**70442 Stuttgart (DE)**

(72) Erfinder:
• **Neubauer, Achim**
**76547 Sinzheim-Vormberg (DE)**
• **Bolz, Martin-Peter**
**77815 Buehl (DE)**
• **Moench, Jochen**
**76547 Sinzheim (DE)**

(56) Entgegenhaltungen:
EP-A- 0 437 806          DE-A- 19 814 804
US-A- 4 045 838          US-A- 4 256 683

• **HEGER, A: 1990 , CARL HANSER VERLAG , MÜNCHEN XP002173358 * Seite 227 - Seite 252 * * Seite 233, Zeile 10 - Seite 238; Abbildungen 6.41,6.44,6.45,6.47 ***
• **MATTSON B ET AL: "SURFACE MODIFICATION OF RUBBER MATERIALS" KAUTSCHUK UND GUMMI - KUNSTSTOFFE, DR. ALFRED HUTHIG VERLAG GMBH. HEIDELBERG, DE, Bd. 45, Nr. 2, 1. Februar 1992 (1992-02-01), Seiten 116-119, XP000464068 ISSN: 0948-3276**

**Beschreibung**

Die Erfindung betrifft ein Scheibenwischerblatt und ein Verfahren zur Herstellung von reibungs- und verschleißmindernden vulkanisierten Elastomeren, insbesondere Scheibenwischergummi, nach der Gattung der unabhängigen Ansprüche.

Stand der Technik

Es ist bekannt, die Scheiben von Kraftfahrzeugen mit Hilfe von Scheibenwischerblättern zu reinigen, die über die Scheibe bewegt werden und dabei Wasser und gegebenenfalls Verschmutzungen herunter streifen. Bekannte Scheibenwischerblätter bzw. -gummis bestehen dabei entweder aus einem einzigen Elastomer oder aus einer Werkstoffkombination von einem etwas härteren Elastomer für die eigentliche Wischerkante bzw. Wischerlippe und einem etwas weicheren Elastomer für den Rücken des Scheibenwischergummis. In beiden Fällen ist das bzw. sind die eingesetzten Elastomere homogen ausvulkanisiert.

Um eine Veränderung der mit der Scheibe in Kontakt tretenden Oberfläche des Scheibenwischerblattes hinsichtlich des Reibungswiderstandes gegenüber Glas sowohl bei Trockenreibung als auch bei Nassreibung zu erzielen, sowie die Elastizität und Abriebbeständigkeit von Scheibenwischerblättern zu verbessern, ist weiterhin bereits bekannt, eine chemische Behandlung der Oberfläche des Scheibenwischerblattes, beispielsweise ein Halogenieren, vorzunehmen, oder eine Oberflächenbeschichtung auf das Wischerblatt aufzubringen. Zur Erzeugung einer derartigen Beschichtung kommt beispielsweise ein Graphitisieren in Frage oder, wie in US 5,766,771 vorgeschlagen, ein Aufbringen einer fest haftenden, hartelastischen und reibungsmindernden Sol-Gel-Beschichtung.

Aus "Strahlenchemische Vernetzung von Polymeren", von A. Heger, 1990, Carl Hanser Verlag, München, ist aus dem Kapitel "Strahlenchemische Vulkanisation von Elastomeren" (Seite 227 bis Seite 252) bekannt, dass bei Dichtelernenten eine lokale Härtung durch Einsatz einer lokalen Bestrahlung erreicht werden kann.

Aufgabe der vorliegenden Erfindung ist die Bereitstellung eines alternativen Verfahrens zur Herstellung eines Scheibenwischergummis mit einem reibungs- und verschleißmindernden vulkanisierten Elastomer und insbesondere die Herstellung einer relativ harten Wischerlippe an einem im Übrigen möglichst flexiblen Wischergummi. Auf diese Weise soll einerseits der Reibwert und die Lebensdauer der Wischerlippe verbessert werden, während andererseits die guten Eigenschaften des gesamten Scheibenwischerblattes, insbesondere hinsichtlich Flexibilität und Elastizität, beibehalten werden können.

Vorteile der Erfindung

Das erfindungsgemäße Verfahren zur Herstellung eines Scheibenwischergummis mit einem reibungs- und verschleißmindernden vulkanisierten Elastomer und das erfindungsgemäße Scheibenwischerblatt hat gegenüber dem Stand der Technik den Vorteil, dass damit eine gezielte Energieeinbringung in die vulkanisierten Elastomere möglich ist, so dass diese bereichsweise einer lokalen Nachvulkanisation unterzogen werden, die zu einer Veränderung der Werkstoffeigenschaften in den nachvulkanisierten Bereichen führt. Auf diese Weise ist es vorteilhaft möglich, eine besonders flexible Wischerlippe zu erzeugen, die im Bereich der Lippenspitze bzw. der Wischlippenkante oder im Bereich ihrer Oberfläche besonders hart und damit verschleißfest sowie gleichzeitig reibungsarm ist. Weiter erlaubt es das erfindungsgemäße Verfahren bei vergleichbaren Eigenschaften der erhaltenen Wischerblätter bzw. Scheibenwischergummis ein aus dem Stand der Technik bekanntes Co-Extrudieren ebenso zu ersetzen wie eine chemische Nachbehandlung, beispielsweise durch Halogenieren, oder ein Graphitisieren.

Das erfindungsgemäße Verfahren bietet jedoch auch die Möglichkeit, die vorgenannten Behandlungen, d.h. Co-Extrudieren und/oder chemische Nachbehandlung, mit dem erfindungsgemäßen Verfahren zu kombinieren.

Weiter ist vorteilhaft, dass der Bereich der lokalen Nachvulkanisation bei der Bestrahlung und/oder die Dicke der nachvulkanisierten Oberflächenschicht in einfacher Weise über die Art und/oder die Energie und/oder den Einfallswinkel der eingesetzten Strahlung eingestellt werden kann.

Das erfindungsgemäße Scheibenwischerblatt hat den Vorteil, dass derjenige Teil der Wischerlippe, der bei Betrieb des Scheibenwischerblattes mit einer Scheibe in Kontakt ist, einerseits einen hohen Widerstand gegen Abrasion und andererseits einen geringeren Reibwert, insbesondere Trockenreibwert, aufweist. Dies führt unter anderem zu einer erhöhten Lebensdauer. Darüber hinaus hat das erfindungsgemäße Scheibenwischerblatt den Vorteil, dass eine durch Alterung und Umwelteinflüsse, beispielsweise durch UV-Bestrahlung, Ozon, Luftfeuchte oder Temperatur, verursachte Schwankung oder zeitliche Veränderung des Reibwertes der Scheibenwischerblätter vermindert wird.

Schließlich ist es nun vorteilhaft möglich, den nicht unmittelbar mit einer Scheibe in Kontakt stehenden Bereich des Scheibenwischerblattes hinsichtlich Schwingungsdämpfung und möglichst hoher Flexibilität bzw. Elastizität unabhängig von den Eigenschaften der eigentlichen Wischerlippe zu optimieren.

Vorteilhafte Weiterbildungen der Erfindung ergeben sich aus den in den Unteransprüchen genannten Maßnahmen.

So eignet sich zur lokalen Nachvulkanisation von Elastomeren durch Bestrahlung vor allem eine energiereiche Strahlung wie hochenergetische Teilchenbestrahlung oder hochenergetische elektromagnetische Strahlung. Die konkrete Auswahl der eingesetzten Strahlung ist dabei von mehreren Parametern abhängig. Diese sind einerseits die Eindringtiefe der eingesetzten Strahlung in die bestrahlten Elastomere, insbesondere da dadurch gezielt eine nachvulkanisierte Oberflächenschicht einer Scheibenwischerlippe erzeugt werden kann, eine möglichst effektive Nachvulkanisation in möglichst geringer Zeit, eine möglichst geringe Schädigung der Molekülketten der eingesetzten Elastomere, die Prozesssicherheit sowie die Investitions- und Unterhaltskosten der zur Durchführung des erfindungsgemäßen Verfahrens eingesetzten Anlage.

Die Eindringtiefe von Ionen- und Röntgenstrahlung ist üblicherweise so hoch, dass sowohl ein Durchstrahlen als auch, bei gezielter Einstellung des Einfallswinkels oder der Energie der Strahlung, eine reine Oberflächenbehandlung der Elastomere bzw. Scheibenwischergummis möglich ist. Zwar sind sowohl beim Einsatz von Ionen- als auch Röntgenstrahlen Sicherheitseinrichtungen erforderlich, beide Prozesse sind bei geringen Unterhaltskosten für die eingesetzten Maschinen im Betrieb gut beherrschbar. Darüber hinaus läßt sich die Intensität von Röntgenstrahlung, insbesondere von Röntgenbremsstrahlung, in sehr einfacher Weise durch die Auswahl des Anodenmaterials, beispielsweise Kupfer oder Wolfram, sowie durch die am Röntgengenerator eingestellte Leistung leicht variieren bzw. regeln.

Der Einsatz von Teilchenstrahlung hat den Vorteil, dass deren Abschirmung gegenüber Röntgenstrahlung einfacher ist, wobei jedoch höhere Energiekosten anfallen.

Neben dem Einsatz von Teilchenstrahlung oder Röntgenstrahlung kommt weiter auch eine Laserbestrahlung, eine IR-Bestrahlung oder eine UV-Bestrahlung in Frage. Laserstrahlung, IR-Strahlung und UV-Strahlung werden von Elastomeren bzw. Scheibenwischergummi stärker absorbiert als Röntgenstrahlen und eigenen sich deshalb vor allem für deren Oberflächenbehandlung. Sie haben zudem den Vorteil, dass sie wesentlich einfacher abzuschirmen sind als beispielsweise Röntgenstrahlen, und dass die erforderliche Anlagentechnik bei ähnlich guter Prozesssicherheit in Anschaffung und Betrieb billiger ist.

Der Einsatz von Laserstrahlung, IR-Strahlung und UV-Bestrahlung hat andererseits den Nachteil, dass die Bestrahlungsintensität schwieriger zu dosieren ist. So müssen beispielsweise zu hohe Energieeinbringungsraten vermieden werden, um ein unerwünschtes Aufschmelzen der Elastomere an deren Oberfläche zu vermeiden.

Zeichnungen

Die Erfindung wird anhand der Zeichnungen und in der nachfolgenden Beschreibung näher erläutert.

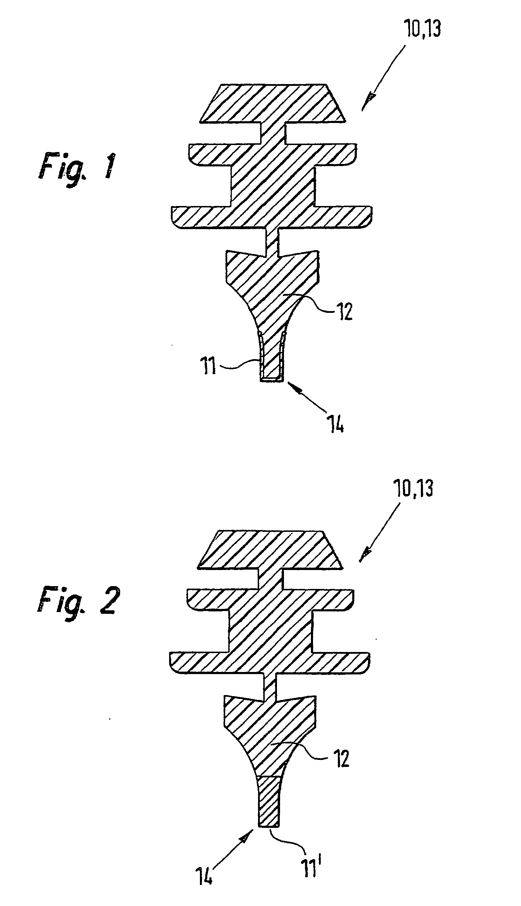

Es zeigt Figur 1 ein Scheibenwischerblatt im Querschnitt mit einer bereichsweise nachvulkanisierten Wischerlippe und Figur 2 eine zu Figur 1 alternative Ausführungsform.

Ausführungsbeispiele

Die Erfindung geht zunächst aus von an sich bekannten Scheibenwischerblättern aus vulkanisierten Elastomeren, die vor und/oder beim Vulkanisieren einer Formgebung unterzogen worden sind. Alternativ kann auch bereits eine chemische Oberflächenbehandlung der Elastomere, insbesondere ein Halogenieren, oder eine Oberflächenbeschichtung, insbesondere ein Graphitisieren, vorgenommen worden sein.

Hinsichtlich weiterer Details zu insoweit bekannten Scheibenwischerblättern sei beispielsweise auf US 5,766,771 verwiesen.

Ein wesentlicher Ausgangspunkt für die vorliegende Erfindung ist die Tatsache, dass der Vulkanisationsgrad von Elastomeren deren Werkstoffeigenschaften beeinflußt. So ist bekannt, dass der Schubmodul G von Elastomeren mit dem Vernetzungsgrad $\nu$ gemäß

$$G = \nu RT$$

linear ansteigt, wobei R die Gaskonstante und T die Temperatur in Kelvin ist. Mit dem Schubmodul G steigt weiter auch die Steifigkeit des Elastomers, das beispielsweise Kautschuk ist, an, während seine Flexibilität und Schwingungsdämpfung abnimmt.

Grundlage der Erfindung ist somit die gezielte Modifikation der Materialeigenschaften desjenigen Bereiches einer Wischerlippe der im Laufe der Lebensdauer eines Scheibenwischerblattes Kontakt mit der zu wischenden Fläche steht gegenüber den nicht in Kontakt mit der zu wischenden Fläche tretenden Scheibenwischerblattbereichen. Diese gezielte Modifikation erfolgt über den Vernetzungsgrad bzw. den Vulkanisationsgrad.

Eine wesentliche Erkenntnis der vorliegenden Erfindung ist nun die Beobachtung, dass ein gezieltes lokales Nachvulkanisieren von Elastomeren, beispielsweise Scheibenwischergummi, und damit eine gezielte lokale Veränderung der mechanischen Eigenschaften dieser Elastomere durch Bestrahlung erreicht wird.

Dabei ist zusätzlich zu beachten, dass durch die Bestrahlung ein Energieeintrag in den bestrahlten Werkstoff erfolgt, der nicht derart groß sein darf, dass eine Reversion in dem bestrahlten Werkstoff, d.h. eine Zerstörung von Molekülketten, einsetzt.

Dieser Effekt ist insbesondere bei Naturkautschuk unter dem Begriff "Übervulkanisation" bekannt, wohingegen bei künstlichen Elastomeren wie Chlorbutadien-Elastomer ein solcher Vorgang nicht zu beobachten ist. Insofern eignet sich zur lokalen Nachvulkanisation durch Bestrahlung vor allem ein derartiges künstliches Elastomer.

Die Figur 1 zeigt ein prinzipiell bekanntes Scheibenwischerblatt 13 im Querschnitt aus einem bevorzugt künstlichen Elastomer 10, wobei das Scheibenwischerblatt 13 im Bereich einer Lippenspitze 14 der Wischerlippe 12 eine Oberflächenschicht 11 aufweist, die durch eine lokale Nachvulkanisation des Elastomers 10 durch Bestrahlung erzeugt worden ist. Die Oberflächenschicht 11 hat beispielsweise eine Dicke von 100 nm bis 5 µm, insbesondere 1 µm bis 2 µm.

Die Figur 2 zeigt ein alternatives Ausführungsbeispiel zu Figur 1, wobei gemäß Figur 2 die gesamte Lippenspitze 14 einer lokalen Nachvulkanisation durch Bestrahlung unterzogen worden ist, so dass nicht, wie im Fall von Figur 1, eine nachvulkanisierte Oberflächenschicht 11 entsteht, sondern die Lippenspitze 14 vollständig, d. h. in einem Kontaktbereich 11', der bei Betrieb des Scheibenwischerblattes 13 in Kontakt mit einer zu wischenden Scheibe steht, nachvulkanisiert worden ist.

Die Figuren 1 und 2 unterscheiden sich somit im Wesentlichen dadurch, dass die Eindringtiefe der zur Bestrahlung eingesetzten Strahlung unterschiedlich ist, was sich in entsprechend unterschiedlichen, der Nachvulkanisation unterzogenen Bereichen der Wischerlippe 12 äußert.

Die Eindringtiefe kann dabei einerseits über die Art der eingesetzten Strahlung, deren Energie und den Einfallswinkel eingestellt werden.

UV-Strahlung oder Laser-Strahlung weist bei senkrechtem Einfall typischerweise eine nur geringe Eindringtiefe von bis zu 100 nm auf, während Röntgenstrahlung oder Teilchenstrahlung, beispielsweise Ionenstrahlung, eine Eindringtiefe von typischerweise mehr als 3 µm hat.

Im Fall des Ausführungsbeispiels gemäß Figur 2 eignet sich somit beispielsweise die weiße Röntgenbremsstrahlung von Kupfer oder Wolfram, die mit Hilfe eines entsprechenden Anodenmaterials und einer Beschleunigungsröhre erzeugt worden ist. Die Dauer der Bestrahlung liegt dabei typischerweise im Bereich von wenigen Sekunden.

**Patentansprüche**

1. Verfahren zur Herstellung eines Scheibenwischergummis mit einem reibungs- und verschleißmindernden vulkanisierten Elastomeren, **dadurch gekennzeichnet, dass** das vulkanisierte Elastomer (10) im Bereich der Scheibenwischerlippe durch eine lokale Nachvulkanisation mittels Bestrahlung gehärtet wird.

2. Verfahren nach Anspruch 1, **dadurch gekennzeichnet, dass** zur Bestrahlung eine hochenergetische Teilchenbestrahlung, insbesondere unter Einsatz von Ionen oder Elektronen, oder eine Bestrahlung mit hochenergetischer elektromagnetischer Strahlung, insbesondere UV-Strahlung, Laserstrahlung, IR-Strahlung oder Röntgenstrahlung, eingesetzt wird.

3. Verfahren nach Anspruch 1, **dadurch gekennzeichnet, dass** die vulkanisierten Elastomere (10) derart bereichsweise bestrahlt werden, dass die lokale Nachvulkanisation lediglich innerhalb einer Oberflächenschicht (11) der Scheibenwischerlippe (12) erfolgt.

4. Verfahren nach Anspruch 1, **dadurch gekennzeichnet, dass** die vulkanisierten Elastomere (10) derart bereichsweise bestrahlt werden, dass die lokale Nachvulkanisation lediglich innerhalb eines Kontaktbereiches (11') der Scheibenwischerlippe (12) erfolgt.

5. Verfahren nach Anspruch 1, **dadurch gekennzeichnet, dass** die Elastomere vor und/oder beim Vulkanisieren einer Formgebung unterzogen werden.

6. Verfahren nach mindestens einem der vorangehenden Ansprüche, **dadurch gekennzeichnet, dass** neben der lokalen Nachvulkanisation zusätzlich eine chemische Oberflächenbehandlung der Elastomere (10), insbesondere ein Halogenieren, oder eine Oberflächenbeschichtung, insbesondere ein Graphitisieren, vorgenommen wird.

7. Verfahren nach mindestens einem der vorangehenden Ansprüche, **dadurch gekennzeichnet, dass** der Bereich der lokalen Nachvulkanisation und/ oder die Dicke der Oberflächenschicht (11) über die Art und/oder die Energie und/oder den Einfallswinkel der eingesetzten Strahlung eingestellt wird.

8. Scheibenwischerblatt mit einer Wischerlippe (12) mit vulkanisierten Elastomeren, **dadurch gekennzeichnet, dass** die Wischerlippe (12) bereichsweise durch Bestrahlung nachvulkanisiert ist.

9. Scheibenwischerblatt nach Anspruch 8, **dadurch gekennzeichnet, daß** die Wischerlippe (12) zumindest im Bereich einer beim Einsatz des Scheibenwischerblattes (13) einem Verschleiß und/oder einer Gleitreibung ausgesetzten Lippenspitze (14) oberflächlich oder vollständig nachvulkanisiert ist.

10. Scheibenwischerblatt nach Anspruch 8 oder 9, **dadurch gekennzeichnet, dass** derjenige Bereich (14) des Scheibenwischerblattes (13), der bei Betrieb einem Verschleiß und/oder einer Gleitreibung ausgesetzt ist, oberflächlich oder vollständig nachvulkanisiert ist, während ein bei Betrieb des Scheibenwischerblattes (13) zumindest weitgehend lediglich einer elastischen Deformation ausgesetzter Bereich des Scheibenwischerblattes (13) nicht nachvulkanisiert ist.

## Claims

1. Process for the production of a rubber windscreen wiper blade with a friction- and wear-reducing vulcanized elastomer, **characterized in that** the vulcanized elastomer (10) is hardened in the region of the windscreen wiper lip by a local post-vulcanization by means of irradiation.

2. Process according to Claim 1, **characterized in that** high-energy particle irradiation is used for the irradiation, in particular using ions or electrons, or an irradiation with high-energy electromagnetic radiation, in particular UV radiation, laser radiation, IR radiation or X-radiation.

3. Process according to Claim 1, **characterized in that** the vulcanized elastomers (10) are irradiated region by region in such a way that the local post-vulcanization only takes place within a surface layer (11) of the windscreen wiper lip (12).

4. Process according to Claim 1, **characterized in that** the vulcanized elastomers (10) are irradiated region by region in such a way that the local post-vulcanization only takes place within a contact region (11') of the windscreen wiper lip (12).

5. Process according to Claim 1, **characterized in that** the elastomers are subjected to moulding before and/or during the vulcanizing.

6. Process according to at least one of the preceding claims, **characterized in that**, apart from the local post-vulcanization, a chemical surface treatment of the elastomers (10) is performed, in particular a halogenation, or a surface coating, in particular a graphitization.

7. Process according to at least one of the preceding claims, **characterized in that** the region of local post-vulcanization and/or the thickness of the surface layer (11) is set by means of the type and/or the energy and/or the angle of incidence of the radiation used.

8. Windscreen wiper blade with a wiper lip (12) with vulcanized elastomers, **characterized in that** the wiper lip (12) is post-vulcanized region by region by irradiation.

9. Windscreen wiper blade according to Claim 8, **characterized in that** the wiper blade (12) is superficially or completely post-vulcanized, at least in the region of a lip tip (14) which is exposed to wear and/or sliding friction during use of the windscreen wiper blade (13).

10. Windscreen wiper blade according to Claim 8 or 9, **characterized in that** that region (14) of the windscreen wiper blade (13) which is exposed to wear and/or sliding friction during operation is superficially or completely post-vulcanized, while a region of the windscreen wiper blade (13) which is at least largely exposed only to an elastic deformation during operation of the windscreen wider blade (13) is not post-vulcanized.

## Revendications

1. Procédé de fabrication d'une lame d'essuie-glace avec un élastomère vulcanisé réducteur de friction et d'usure,
**caractérisé en ce que**
l'élastomère vulcanisé (10) est durci, dans les zones de la lèvre d'essuie-glace, par une post-vulcanisation locale au moyen d'un rayonnement.

2. Procédé selon la revendication 1,
**caractérisé en ce que**
comme rayonnement on utilise un rayonnement de particules hautement énergétique, notamment en mettant en oeuvre des ions ou des électrons, ou un rayonnement électromagnétique hautement énergétique, notamment un rayonnement UV, laser, IR ou X.

3. Procédé selon la revendication 1,
**caractérisé en ce que**
les élastomères vulcanisés (10) sont exposés au rayonnement par zones, de telle sorte que la post-vulcanisation locale n'est réalisée qu'à l'intérieur d'une couche superficielle (11) de la lèvre d'essuie-glace (12).

4. Procédé selon la revendication 1,
**caractérisé en ce que**
les élastomères vulcanisés (10) sont exposés au rayonnement par zones, de telle sorte que la post-vulcanisation locale n'est réalisée qu'à l'intérieur d'une zone de contact (11') de la lèvre d'essuie-glace (12).

5. Procédé selon la revendication 1,
**caractérisé en ce que**
les élastomères subissent une mise en forme avant et/ou pendant la vulcanisation.

6. Procédé selon au moins l'une des revendications précédentes,

**caractérisé en ce qu'**
outre la post-vulcanisation locale on réalise également un traitement de surface chimique des élastomères (10), notamment une halogénation, ou un revêtement de surface, notamment une graphitisation.

7. Procédé selon au moins l'une des revendications précédentes,
   **caractérisé en ce que**
   la zone de la post-vulcanisation locale et/ou l'épaisseur de la couche superficielle (11) est réglée en fonction du type et/ou de l'énergie et/ou de l'angle incident du rayonnement utilisé.

8. Balai d'essuie-glace avec une lèvre d'essuyage (12) avec des élastomères vulcanisés,
   **caractérisé en ce que**
   la lèvre d'essuyage (12) est post-vulcanisée par zones par exposition aux rayons.

9. Balai d'essuie-glace selon la revendication 8,
   **caractérisé en ce que**
   la lèvre d'essuyage (12) est post-vulcanisée superficiellement ou complètement, du moins dans la zone d'une pointe de lèvre (14) exposée à l'usure et/ou à une friction de glissement lors du fonctionnement du balai d'essuie-glace (13).

10. Balai d'essuie-glace selon la revendication 8 ou 9,
    **caractérisé en ce que**
    la zone (14) du balai d'essuie-glace (13), qui lors du fonctionnement est exposée à une usure et/ou une friction de glissement, est superficiellement ou complètement post-vulcanisée, tandis qu'une zone du balai d'essuie-glace (13), qui lors du fonctionnement n'est exposée qu'à une déformation élastique, du moins pour l'essentiel, n'est pas post-vulcanisée.

Fig. 1

10,13

12

11

14

Fig. 2

10,13

12

14          11'